# EUROPÄISCHE PATENTANMELDUNG

(11) **EP 1 564 387 A1**
(43) Veröffentlichungstag der Anmeldung: **17.08.2005**
(21) Anmeldenummer: 05002884.4
(22) Anmeldetag: 11.02.2005
(51) Int. Cl.: F01N 9/00, F01N 11/00

(54) **Verfahren zum Betreiben eines Partikelfilters**

(30) Priorität: 12.02.2004 DE 102004007041
(71) Anmelder: DaimlerChrysler AG, 70567 Stuttgart (DE)
(72) Erfinder: Birkhofer, Thomas, 88090 Immenstadt (DE); Dittler, Achim, Dr., 70619 Stuttgart (DE); Hertzberg, Andreas, Dr., 71706 Markgröningen (DE); Knezevic, Aleksandar, Dr., 88045 Friedrichshafen (DE); Plog, Carsten, Dr., 88677 Markdorf (DE)

(57) **Zusammenfassung**

2.1. Es wird ein Verfahren zum Betreiben eines Partikelfilters im Abgasstrang einer Brennkraftmaschine vorgeschlagen, bei welchem beim Betrieb der Brennkraftmaschine eine Beladung des Partikelfilters mit Ruß und/oder Asche erfolgt und von Zeit zu Zeit eine Regeneration des Partikelfilters durch Abbrennen des auf dem Partikelfilter angesammelten Rußes ausgelöst wird.
2.2. Erfindungsgemäß wird die Beladung des Partikelfilters in einem dreidimensionalen zusammenhängenden Volumenteilbereich des Partikelfilterkörpers sensorisch ermittelt und die Regeneration ausgelöst, wenn die Rußbeladung des Partikelfilters in dem Volumenteilbereich einen vorgebbaren oberen Grenzwert überschritten hat.
2.3. Anwendung in Kraftfahrzeugen mit Verbrennungsmotor, insbesondere mit Dieselmotor.

## Beschreibung

Die Erfindung betrifft ein Verfahren zum Betreiben eines Partikelfilters im Abgasstrang einer Brennkraftmaschine mit den Merkmalen des Oberbegriffs des Anspruchs 1.

Aus der Offenlegungsschrift DE 100 33 160 A1 ist es bekannt, einen Partikelfilter zur Verminderung der Partikelemission einer Brennkraftmaschine einzusetzen. Beim Betrieb der Brennkraftmaschine erfolgt eine zeitlich zunehmende Beladung des Partikelfilters mit Ruß- und/oder Ascheteilchen. Um ein Verstopfen des Partikelfilters zu verhindern, wird der angesammelte Ruß von Zeit zu Zeit durch Erhöhen der Abgastemperatur über die Rußabbrandtemperatur hinaus abgebrannt. Zur Feststellung der Notwendigkeit einer Partikelfilterregeneration wird die Beladung des Partikelfilters überwacht. Die Regeneration wird ausgelöst, wenn der durch die Rußbeladung verursachte Gegendruck des Partikelfilters unzulässig angestiegen ist. Hierzu wird das Signal eines Differenzdrucksensors ausgewertet. Bei Erreichen eines oberen Grenzwertes für die Beladung wird eine Regeneration des Partikelfilters gestartet, bei welcher der auf oder in dem Partikelfilter angesammelte Ruß abgebrannt wird.

Die Ermittlung der Partikelfilterbeladung auf der Basis eines Differenzdrucksensors ist allerdings auf Grund schwankender Durchsatzverhältnisse und Partikelfiltertemperaturen mit Ungenauigkeiten behaftet. Es besteht daher die Möglichkeit, dass die Regeneration des Partikelfilters verspätet gestartet wird, was zu Störungen des Fahrbetriebs und zu einer Schädigung des Partikelfilters führen kann. Dagegen führen verfrühte Regenerationen zu einem erhöhten Kraftstoffverbrauch.

Aus der Patentschrift US 4,656,832 ist es bekannt, zur Ermittlung der Rußbeladung eines Partikelfilters eine Elektrodenanordnung auf einem flächigen nichtleitenden Substrat aufzubringen und die Gesamtanordnung in den Abgasweg, gegebenenfalls auch ins Innere eines Partikelfilters einzubringen. Auf dem Substrat abgelagerte Rußpartikel vermindern den zwischen den Elektroden messbaren elektrischen Widerstand, woraus die Rußpartikelablagerung auf dem Substrat ermittelt und daraus der Zeitpunkt für eine Partikelfilterregeneration abgeleitet wird.

Die Erfassung der Rußbeladung auf einem flächigen Referenzbereich ermöglicht es jedoch ebenfalls nicht, die Detektierung des Beladungszustandes des Partikelfilters mit der gewünschten Genauigkeit vorzunehmen und den Partikelfilter optimal zu betreiben.

Aufgabe der Erfindung ist es daher, ein Verfahren für ein zuverlässigeres Betreiben eines Partikelfilters anzugeben, mit welchem insbesondere Schädigungen des Partikelfilters vermieden werden können und welches einen möglichst geringen Kraftstoffverbrauch ermöglicht.

Diese Aufgabe wird durch ein Verfahren mit den Merkmalen des Anspruchs 1 gelöst.

Das erfindungsgemäße Verfahren zeichnet sich dadurch aus, dass die Beladung des Partikelfilters in einem dreidimensionalen zusammenhängenden Volumenteilbereich des Partikelfilterkörpers sensorisch ermittelt wird und die Regeneration ausgelöst wird, wenn die Rußbeladung des Partikelfilters in dem Volumenteilbereich einen vorgebbaren oberen Grenzwert überschritten hat. Die Erfassung der Partikelfilterbeladung in einem volumenmäßig ausgedehnten Teilbereich des Partikelfilterkörpers ermöglicht einerseits eine differenziertere Bewertung des Beladungszustandes im Vergleich zu einer integralen Beladungsermittlung des gesamten Filterkörpers. Andererseits kann ein maßgebender Teil des Partikelfilters erfasst werden. Dies ermöglicht eine genaue Bewertung des Beladungszustandes und somit die Bestimmung eines optimalen Zeitpunkts zur Auslösung einer Partikelfilterregeneration durch Rußabbrand. Dadurch können sowohl unnötige als auch verspätete Regenerationen sicher vermieden werden. Unter der Beladung des Partikelfilterkörpers wird dabei die volumenbezogene Ablagerung fester Bestandteile wie Ruß oder Asche in seinem Inneren verstanden. Vorzugsweise wird die Beladung in Gramm je Liter Filtervolumen angegeben. Der für die Auslösung der Regeneration maßgebende Grenzwert für die Rußbeladung kann hierbei abhängig vom Ort der Beladungsmessung im Partikelfilterkörper, der vorhandenen Aschebeladung, von der maximal tolerierbaren Wärmefreisetzung beim Rußabbrand während der Regeneration oder abhängig von anderen, gegebenenfalls motorischen Betriebsgrößen festlegbar sein. Als Partikelfilter kommen hauptsächlich poröse Formkörper oder mit Kanälen mit porösen Wänden durchzogene monolithische Formkörper in Betracht.

In Ausgestaltung der Erfindung erfolgt die sensorische Ermittlung der Beladung des Partikelfilters durch eine Messanordnung, welche ein Elektrodenpaar mit einer ersten Elektrode und einer beabstandet zur ersten Elektrode angeordneten zweiten Elektrode umfasst, wobei der Volumenteilbereich zwischen der ersten Elektrode und der zweiten Elektrode angeordnet ist und von der Messanordnung eine elektrische Größe erfasst wird, die mit der Dielektrizitätszahl der in dem Volumenteilbereich vorhandenen Materie korreliert. Die erste Elektrode und die zweite Elektrode sind vorzugsweise flächig ausgebildet und einander diametral gegenüberliegend angeordnet und begrenzen somit den zwischen ihnen liegenden Volumenteilbereich des Partikelfilters senkrecht zur Richtung ihrer Verbindungslinie. Somit weist der Volumenteilbereich zumindest annähernd eine Zylinderform auf, wobei die Elektroden des Elektrodenpaars die Endflächen des zylinderförmigen Volumenteilbereichs bestimmen. Die Gestalt des Volumenteilbereichs, in welchem die Rußbeladung integral erfasst wird, ergibt sich demnach durch die Geometrie der Elektrodenstruktur, d.h. durch die Form der Fläche der jeweiligen Elektroden sowie durch deren Abstand. Da Ruß als elektrisch leitfähiges Material eine um ein Vielfaches höhere Dielektrizitätszahl als ein Isolator aufweist, kann insbesondere bei einem aus elektrisch isolierendem Material wie Keramik ausgebildeten Partikelfilterkörper über die Erfassung einer mit der Dielektrizitätszahl korrelierenden Größe die Rußbeladung im Volumenteilbereich zuverlässig ermittelt werden.

In weiterer Ausgestaltung der Erfindung wird die Beladung des Partikelfilters in wenigstens zwei unterschiedlichen Volumenteilbereichen des Partikelfilters ermittelt, und die Regeneration des Partikelfilters wird ausgelöst, wenn die Rußbeladung in wenigstens einem der wenigstens zwei Volumenteilbereiche den vorgebbaren oberen Grenzwert überschritten hat.

Der Beladungszustand des Partikelfilters wird somit ortsaufgelöst bzw. räumlich aufgelöst ermittelt, wodurch dieser genauer charakterisiert ist. Das Starten einer Regeneration orientiert sich an der Rußbeladung eines jeweils erfassten Partikelfilter-Volumenteilbereiches. Im Gegensatz zu einer integralen Ermittlung der Beladung des gesamten Partikelfilters können somit lokal erhöhte Beladungen rechtzeitig erkannt werden, wodurch Temperaturspitzen - sogenannte hot spots - bei der Partikelfilterregeneration vermieden werden.

In Ausgestaltung der Erfindung wird die Beladung des Partikelfilters in Volumenteilbereichen ermittelt, die in Richtung der Abgasströmung zueinander versetzt sind. Da die Beladung des Partikelfilters im wesentlichen eine Abhängigkeit von der Abgasströmungsrichtung besitzt, d.h. einen axialen Gradienten aufweist, kann somit der örtliche bzw. axiale Verlauf der Beladung im Partikelfilter ermittelt werden. Dadurch kann der Beladungszustand des Partikelfilters genauer ermittelt werden.

In weiterer Ausgestaltung der Erfindung wird die Beladung des Partikelfilters in einem Volumenteilbereich am ausströmseitigen Ende des Partikelfilters ermittelt. Erfahrungsgemäß wächst die Beladung des Partikelfilters am ausströmseitigen Ende des Partikelfilters am raschesten an, weshalb dieser Bereich des Partikelfilters besonders gefährdet hinsichtlich einer Verstopfung ist. Die Zuverlässigkeit des Betriebs des Partikelfilters lässt sich daher erhöhen, wenn dieser kritische Bereich gesondert überwacht wird. Bei einer Mehrzahl von erfassten Volumenteilbereichen ist es vorteilhaft, diese in Strömungsrichtung in zunehmender Dichte anzuordnen.

In weiterer Ausgestaltung der Erfindung wird die Dauer der Regeneration an die Beladung des Partikelfilters vor der Auslösung der Regeneration angepasst. Der verbrauchsintensive Regenerationsbetrieb wird auf diese Weise nur so lange wie nötig aufrechterhalten, was eine besonders kraftstoffverbrauchssparende Partikelfilterregeneration ermöglicht. Bei mehreren erfassten Volumenteilbereichen ist es insbesondere vorteilhaft, die Dauer der Partikelfilterregeneration an die höchste in einem der jeweiligen Bereiche ermittelte Beladung anzupassen, wodurch unvollständige Partikelfilterregenerationen vermieden werden.

In weiterer Ausgestaltung der Erfindung wird die Beladung des Partikelfilters während der Regeneration des Partikelfilters ermittelt und die Regeneration beendet, wenn die Beladung einen vorgebbaren unteren Grenzwert unterschreitet. Durch die ortsaufgelöste, direkte Ermittlung der Partikelfilterbeladung während der Regeneration kann der Fortschritt der Regeneration besonders genau verfolgt und das Ende der Regeneration zuverlässig festgelegt werden.

In weiterer Ausgestaltung der Erfindung wird die Rußbeladung des Partikelfilters nach erfolgter Regeneration ermittelt und mit einem vorgebbaren Sollwert verglichen und die Dauer einer nachfolgenden Regeneration wird in Abhängigkeit vom Ergebnis des Vergleichs festgelegt. Auf diese Weise kann eine optimale Regenerationsdauer auch ohne Ermittlung der Rußbeladung während der Regeneration festgelegt werden. Vorteilhaft ist es auch, die Rußbeladung unmittelbar vor und unmittelbar nach der Regeneration zu ermitteln. Aus der Differenz der Rußbeladungen kann auf diese Weise die Güte der Regeneration ermittelt werden und die Regenerationsdauer nachfolgender Regenerationen im Sinne einer möglichst vollständigen Regeneration festgelegt werden. Vorteilhaft ist, den Erfolg von mehreren Regenerationen auf die beschriebene Weise zu ermitteln, um einen statistisch besser abgesicherten Mittelwert für die festzulegende Regenerationsdauer zu erhalten.

In weiterer Ausgestaltung der Erfindung werden bei der Ermittlung der Beladung des Partikelfilters ein Rußbeladungsanteil und ein Aschebeladungsanteil ermittelt. Dies ermöglicht eine weiter verbesserte Charakterisierung des Beladungszustands des Partikelfilters und eine weiter verbesserte Genauigkeit bei der Ermittlung eines geeigneten Zeitpunkts für die Regeneration des Partikelfilters, da auf Asche zurückgehende Beladungsanteile nicht fälschlicherweise als Rußbeladung interpretiert werden.

In weiterer Ausgestaltung der Erfindung erfolgt eine Auswertung der ermittelten Beladung des Partikelfilters hinsichtlich einer Unbrauchbarkeit des Partikelfilters und es wird bei einer festgestellten Unbrauchbarkeit eine darauf hinweisende Meldung ausgegeben wird. Eine Unbrauchbarkeit kann beispielsweise durch eine unzulässig hohe Aschebeladung eintreten, welche erfindungsgemäß festgestellt werden kann.

In weiterer Ausgestaltung der Erfindung wird durch die Messanordnung die zwischen den Elektroden wirksame komplexe elektrische Impedanz oder die elektrische Kapazität erfasst. Wegen seiner hohen Dielektrizitätszahl kann insbesondere Ruß durch eine Impedanzmessung zuverlässig detektiert werden. Durch die Messanordnung bzw. die Elektroden wird demnach ein kapazitiver Sensor gebildet und die Beladung durch Auswertung der zwischen den Elektroden wirksamen elektrischen Impedanz bzw. der Kapazität der Eelktrodenanordnung ermittelt. Dabei wirkt der von der Imbedanzmessung erfasste Partikelfilterbereich selbst den mit Elektroden versehenen Sensor.

Im Folgenden wird die Erfindung anhand von Zeichnungen und zugehörigen Beispielen näher erläutert. Dabei zeigen:
- Fig. 1: eine schematische Perspektivansicht eines Partikelfilterteils sowie eine zugehörige Messanordnung zur Ermittlung der Partikelfilterbeladung und
- Fig. 2: ein schematische Querschnittsansicht eines Partikelfilterteils sowie eine zugehörige Messanordnung zur Ermittlung der Partikelfilterbeladung.

Nachfolgend werden vorteilhafte Ausführungsformen der Erfindung anhand von Beispielen beschrieben. Dabei wird beispielhaft ein Kraftfahrzeug mit einem Dieselmotor und einer Abgasreinigungsanlage, welche einen Partikelfilter umfasst, betrachtet. Es versteht sich, dass neben dem Partikelfilter weitere Abgasreinigungseinheiten, wie beispielsweise ein dem Partikelfilter vorgeschalteter Oxidationskatalysator in der Abgasreinigungsanlage vorhanden sein können. Als Partikelfilter kommt jeder geeignete Filtertyp in Betracht, nachfolgend wird jedoch ein sogenanntes "Wall-Flow-Filter" mit wechselseitig durch Stopfen verschlossenen, parallel verlaufenden Filterkanälen betrachtet. Das Filter ist vorzugsweise aus einem keramischen Material wie Siliziumkarbid oder Cordierit gebildet. Insbesondere bei einem aus Siliziumkarbid als Grundmaterial gebildeten Partikelfilter ist es vorteilhaft, wenn der Formkörper aus einzelnen Segmenten gebildet ist.

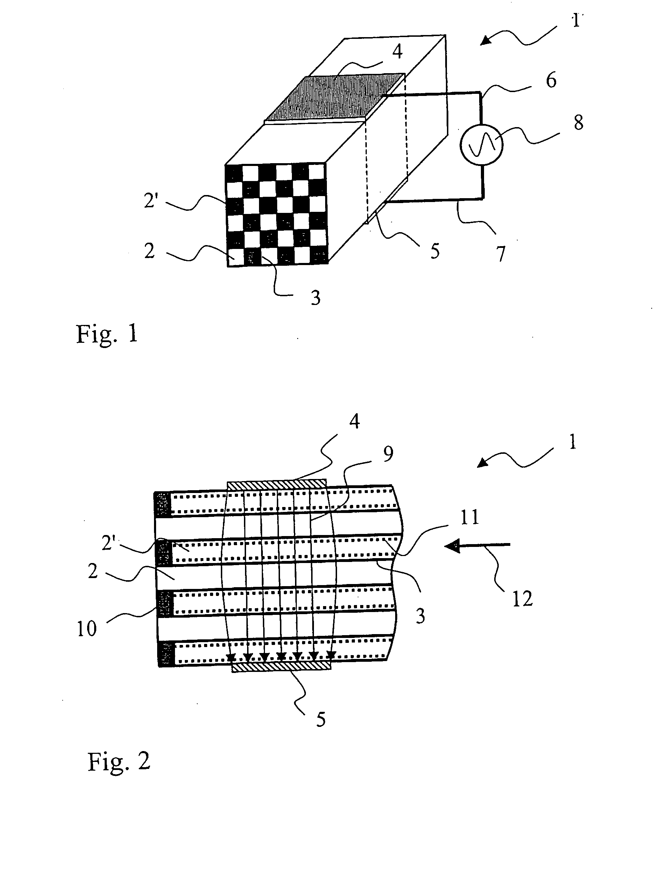

In Fig.1 ist ein Segment eines solchen Partikelfilters 1 ausschnittsweise in einer schematischen Perspektivansicht dargestellt. Der Partikelfilter 1 weist an der Eintrittsseite offene und an der Gasaustrittsseite verschlossene Gaseintrittskanäle 2, sowie an der Eintrittsseite verschlossene, jedoch an der Gasaustrittsseite offene Gasaustrittskanäle 2' auf. Die Kanäle 2, 2' sind durch poröse Kanalwände 3 voneinander getrennt, so dass der Abgasstrom durch die Kanalwände 3 gezwungen wird, wobei mit dem Abgasstrom mitgetragene Partikel ausgefiltert werden und sich auf den Kanalwänden 3 ablagern. Somit tritt eine allmählich zunehmende Beladung des Partikelfilters 1 mit den ausgefilterten Rußpartikeln bzw. Aschepartikeln ein.

Erfindungsgemäß ist für den Partikelfilter 1 eine Messanordnung mit einer Elektrodenstruktur vorgesehen, mit welcher die Beladung des Partikelfilters 1 ermittelt werden kann. Dabei ist die Elektrodenstruktur hier beispielhaft durch eine erste, etwa rechteckige, planare Elektrode 4 und eine diametral entgegengesetzt angeordnete zweite, ebenso gestaltete Elektrode 5 gebildet. Die Elektroden 4, 5 werden vorzugsweise wie dargestellt so angeordnet, dass die zwischen ihren jeweiligen Mittelpunkten verlaufende gedachte Verbindungslinie senkrecht zur Längsrichtung der Kanäle 2, 2' des Partikelfilters 1 orientiert ist. Die Elektroden 4, 5 bilden somit die Endflächen eines zusammenhängenden, etwa zylinderförmigen Volumenteilbereichs des Partikelfilters 1, wobei dieser Volumenteilbereich hier überall einen etwa rechteckigen Querschnitt aufweist. Die Längsabmessungen des zylinderförmigen Volumenteilbereichs entsprechen hier den Querabmessungen des Partikelfilters 1 bzw. des Partikelfiltersegments und die Elektroden 4, 5 liegen jeweils außen am Partikelfilter an.

Die Messanordnung umfasst weiter einen Generator 8, der über Zuleitungen 6, 7 an die Elektroden 4, 5 angeschlossen ist. Über den Generator 8 werden die Elektroden 4, 5 mit einer vorzugsweise als Wechselspannung ausgebildeten Messspannung versorgt. Die Elektroden 4, 5 bilden auf diese Weise die Platten eines Plattenkondensators, dessen Dielektrikum durch die zwischen den Elektroden 4, 5 befindliche Materie gebildet wird. Es ist vorgesehen, den Generator 8 neben der Spannungs- bzw. Stromversorgung auch zur Auswertung des Messsignals einzusetzen.

Der Sachverhalt ist in Fig. 2 nochmals in einer schematischen Querschnittsansicht dargestellt, wobei auf die Darstellung des Generators 8 sowie der Zuleitungen 6, 7 verzichtet wurde; ansonsten sind die in Bezug auf Fig. 1 funktionsgleichen Bestandteile mit den gleichen Bezugszeichen versehen. Insbesondere wird auf die durch den Pfeil 12 angegebene Strömungsrichtung des Abgases sowie auf die Verschlussstopfen 10, welche die Gaseintrittskanäle 2 am abströmseitigen Ende des Partikelfilters 1 verschließen, hingewiesen. Schematisch dargestellt ist ferner die auf der Innenseite der Gaseintrittskanäle 2 auftretende, meist schichtförmig in Erscheinung tretende Beladung 11 mit Ruß und/oder Asche.

Vorteilhaft ist es, einen aus mehreren strömungsmäßig parallel geschalteten Segmenten zusammengesetzten Partikelfilter einzusetzen. Dabei sind Partikelfiltersegmente mit rechteckigem oder quadratischen Querschnitt bevorzugt. Insgesamt kann durch eine äußere Abrundung eines solcherart aus einzelnen Segmenten zusammengesetzten Partikelfilters dennoch ein Partikelfilterkörper mit rundem oder ovalen Querschnitt erhalten werden. Die einzelnen Segmente werden mechanisch mit einer teilelastischen Verbindungsmasse bündig miteinander verbunden. In diesem Fall ist es vorteilhaft, die Elektroden 4, 5 an der Stoßstelle zwischen zwei jeweils aneinanderstoßenden Segmenten anzubringen, so dass sie auf der Außenseite eines jeweiligen Segments aufliegen und von der Verbindungsmasse umschlossen sind. Die geschilderte Anordnung ist jedoch hier nicht gesondert dargestellt. Ein von der Messanordnung erfasster Volumenteilbereich des Partikelfilters kann mit der geschilderten Messanordnung auch vollkommen im Inneren des Partikelfilterkörpers angeordnet und von Partikelfiltermaterial umgeben sein. Auf die geschilderte Weise ist es daher ermöglicht, die in Bezug auf die Abgasströmungsrichtung radiale Abhängigkeit der Partikelfilterbeladung zu ermitteln.

Erfindungsgemäß wird die elektrische Kapazität bzw. die komplexe elektrische Impedanz des durch die Elektroden 4, 5 gebildeten Kondensators durch den Generator 8 ermittelt. Dabei ist durch die symbolischen Feldlinien 9 der von der Impedanzmessung erfasste Volumenteilbereich des Partikelfilters 1 schematisch dargestellt. Die im entsprechenden Volumenteilbereich des Partikelfilters 1 wirksame elektrische Impedanz ist einerseits von der Fläche der Elektroden 4, 5 und von deren Abstand abhängig. Andererseits ist die Impedanz jedoch auch von der Dielektrizitätszahl der zwischen den Elektroden 4, 5 befindlichen Materie abhängig. Auf Grund der vergleichsweise hohen Dielektrizitätszahl von in der Beladung 11 vorhandenem Ruß kann insbesondere die Rußbeladung im von der Impedanzmessung erfassten Volumenbereich mit hoher Genauigkeit gemessen werden. Dabei ist es vorgesehen, die elektrische Impedanz sowohl hinsichtlich ihres Imaginärteils als auch ihres Realteils bzw. nach Betrag und Phase auszuwerten. Nachfolgend wird mit Bezug auf die genannten Messgrößen vereinfachend von einem Messsignal gesprochen.

In diesem Zusammenhang ist es vorteilhaft, die Messfrequenz zur Ermittlung der Impedanz im Sinne eines möglichst großen Messsignals und einer möglichst zuverlässigen Aussage über die Beladung geeignet zu wählen oder gegebenenfalls zu variieren. Vorteilhafterweise wird die Frequenz der Messspannung im Bereich zwischen 1 kHz und etwa 30 MHz eingestellt. Bevorzugt ist ein Frequenzbereich von etwa 1 MHz bis etwa 20 MHz, besonders bevorzugt beträgt die Messfrequenz etwa 10 MHz. Vorteilhaft ist es in diesem Zusammenhang auch, gleichzeitig die Temperatur in dem maßgebenden Partikelfilterbereich oder im Bereich der Elektroden 4, 5 zu erfassen. Somit können Temperaturabhängigkeiten des Impedanzmesswertes korrigiert werden bzw. eine Temperaturkompensation des Messsignals vorgenommen werden.

Erfindungsgemäß ist es vorgesehen, wenigstens zwei, vorzugsweise mehrere Messanordnungen bzw. Elektrodenanordnungen an unterschiedlichen Stellen anzubringen, wodurch eine ortsaufgelöste Ermittlung der Beladung im Partikelfilter 1 ermöglicht wird. Dabei können die von der Impedanzmessung erfassten Volumenteilbereiche sich überlappen oder voneinander getrennt sein. Auf diese Weise kann die Beladung des Partikelfilters 1 lokal bzw. räumlich aufgelöst ermittelt werden. Je nach Größe des Partikelfilters 1 und nach der angestrebten Ortsauflösung können drei, vier, oder mehr Messanordnungen, vorzugsweise in Abgasströmungsrichtung versetzt angeordnet sein. Da insbesondere der ausströmseitige Endbereich des Partikelfilters 1 verstopfungsanfällig ist, ist es bei mehreren erfassten Volumenteilbereichen vorteilhaft, diese in Strömungsrichtung des Abgases zunehmend dichter anzuordnen, was die Genauigkeit der Beladungsermittlung verbessert. Dabei kann es auch vorteilhaft sein, eine Variation hinsichtlich der lateralen Platzierung vorzusehen, wodurch eine gegebenenfalls ungleichmäßige Strömungsverteilung bzw. Beladungsverteilung erkannt werden kann.

Auf diese Weise werden lokale Ruß- und/oder Ascheansammlungen erfasst und es kann eine Regeneration des Partikelfilters 1 eingeleitet werden, wenn die Rußbeladung in wenigstens einem der erfassten Volumenteilbereiche einen vorgebbaren Grenzwert überschreitet. Dadurch wird vermieden, dass der Partikelfilter 1 lokal über ein zulässiges Mindestmaß hinaus mit Ruß beladen wird und dadurch bei einer Regeneration durch Rußabbrand durch übermäßige Wärmefreisetzung an dieser Stelle zerstört wird. Es versteht sich, dass eine Regeneration auch ausgelöst wird, wenn festgestellt wird, dass die integrale Gesamtbeladung des Partikelfilters 1 einen vorgebbaren Schwellenwert überschreitet. Ferner ist es vorteilhaft, den die Regeneration auslösenden Grenzwert gegebenenfalls anzupassen, um beispielsweise auf sich ändernde Regenerationsbedingungen zu reagieren. Auf diese Weise wird ein unzulässiges Ansteigen des durch die Beladung verursachten Gegendrucks vermieden. Durch das bedarfsgerechte, an die tatsächliche Rußbeladung angepasste Auslösen der Partikelfilterregeneration wird die Anzahl der Regenerationen auf ein Mindestmaß beschränkt und damit auch die thermische Belastung des Partikelfilters 1 und gegebenenfalls vorhandener weiterer Abgasreinigungseinheiten gering gehalten.

Die für die Auslösung einer Regeneration maßgebenden Grenzwerte für die lokale Beladung bzw. die integrale Beladung werden zweckmäßigerweise in einem Steuergerät hinterlegt. Vorzugsweise wird von diesem Steuergerät der Betrieb des Dieselmotors gesteuert und für eine Regeneration des Partikelfilters 1 umgestellt. Hierfür geeignete Betriebsweisen sind dem Fachmann geläufig und bedürfen daher hier keiner weiteren Erläuterung.

Vorteilhaft ist es, wenn die Regenerationszeit des Partikelfilters 1 in Abhängigkeit von der vor der Auslösung der Regeneration festgestellten lokalen und/oder integralen Beladung z.B. durch eine kennfeldbasierte Regenerationszeitvorgabe festgelegt wird. In diesem Zusammenhang ist es vorteilhaft, die Temperatur im Partikelfilter 1 zu erfassen und die Regenerationszeit in Abhängigkeit von vorab gespeicherten Rußabbrandgeschwindigkeiten für die jeweilige Temperatur festzulegen. Der Erfolg der Regeneration wird zweckmäßig nach Abschluss der Regeneration durch eine erneute Ermittlung der Beladung überprüft. Die Regenerationszeitvorgabe kann entsprechend korrigiert werden, indem ein Vergleich zwischen der festgestellten Beladung vor und nach der Regeneration ausgewertet wird. Auf diese Weise wird vermieden, dass der für die Regeneration erforderliche Betriebszustand länger als notwendig aufrechterhalten bleibt; der Energieaufwand bzw. Kraftstoffmehrverbrauch für die Regeneration wird dadurch klein gehalten. Für eine zuverlässige Festlegung der Regenerationsdauer ist es dabei zweckmäßig, eine Mittelung aus den entsprechenden Werten vor und nach mehreren Regenerationen vorzunehmen.

Besonders vorteilhaft ist es, die Beladung des Partikelfilters 1 auch während der Regeneration zu überwachen. Der Regenerationsbetrieb wird dann vorzugsweise solange aufrechterhalten, bis die Beladung in jedem der erfassten Volumenteilbereiche einen vorgebbaren unteren Grenzwert unterschritten hat. Auf diese Weise werden unvollständige Partikelfilterregenerationen vermieden und die Aufnahmekapazität des Partikelfilters 1 für den nachfolgenden Normalbetrieb des Dieselmotors wird maximiert.

Die Ermittlung der Partikelfilterbeladung in zwei oder mehreren Volumenteilbereichen des Partikelfilters 1 wird vorteilhafterweise auch zur Differenzierung zwischen einem Rußbeladungsanteil und einem Aschebeladungsanteil genutzt. Hierzu wird ausgenützt, dass sich das Beladungssignal einer jeweiligen Messanordnung additiv aus einem durch die Rußbeladung und einem durch die Aschebeladung verursachten Anteil zusammensetzt und die Aschebeladung kontinuierlich anwächst. Obschon der Beitrag der Aschebeladung am gesamten Messsignal gering ist, kann der Aschebeladungsanteil gegebenenfalls ermittelt werden, wenn der zeitliche Verlauf des Messsignals erfasst wird und ein im Verlauf der Einsatzdauer des Partikelfilters stetig anwachsender Signalanteil ermittelt und berücksichtigt wird. Vorteilhaft ist in diesem Zusammenhang auch eine Variation der Messfrequenz.

Insbesondere bei einem sehr geringen Anteil der Aschebeladung am Messsignal ist es vorteilhaft, die Aschebeladung indirekt zu ermitteln, indem das Messsignal hinsichtlich seines zeitlichen und örtlichen Verlaufs ausgewertet wird. Insbesondere ist es möglich, auf Grund gegebenenfalls unterschiedlicher Verläufe der Messsignale festzustellen, inwieweit ein Teil des Partikelfilters 1 stärker verrußt als ein anderer, bzw. ob auf Grund einer sehr starken Ascheablagerung in einem Volumenteilbereich nur noch eine geringe oder keine Verrußung mehr stattfindet.

Da mit steigender Aschebeladung die Aufnahmekapazität für Rußpartikel absinkt, ist es vorteilhaft die Regenerationsdauer und/oder die Zeitintervalle zwischen zwei Regenerationen in Abhängigkeit von der ermittelten Aschebeladung anzupassen bzw. festzulegen.

Speziell kann eine totale Verstopfung durch Ascheablagerung festgestellt werden, wenn in einem Volumenteilbereich des Partikelfilters 1 eine Akkumulation von Ruß nicht mehr stattfindet, also ein zumindest annähernd stabiles Messsignal vorliegt. Insbesondere bei der Erfassung der Beladung in einer Mehrzahl von Bereichen des Partikelfilters 1 kann somit ein Ascheverfüllgrad in bezug auf das Gesamtvolumen des Partikelfilters ermittelt werden. Somit kann ein Unbrauchbarwerden des Partikelfilters 1 infolge einer überhöhten Aschebeladung rechtzeitig festgestellt werden und eine dementsprechende Warnmeldung ausgegeben werden. Vorteilhaft ist es in diesem Zusammenhang, eine vorausschauende Berechnung über den weiteren Verlauf der Ascheablagerung vorzunehmen und eine Warnmeldung auszugeben, wenn eine vorgebbare verbleibende Restlaufzeit bis zum Unbrauchbarwerden des Partikelfilters 1 unterschritten wird.

Im Falle eines Wall-Flow-Filters kann ein Unbrauchbarwerden auch infolge eines Stopfendurchbruchs auftreten. Damit ist in dem betreffenden Bereich keine Filterwirkung mehr vorhanden. Dieser Schadensfall kann daher erkannt werden, wenn über eine vorgebbare Zeitdauer kein nennenswerter Anstieg der Beladung in einem jeweiligen Bereich mehr erfolgt. Es ist vorgesehen, auch für diesen Schadensfall eine Fehlermeldung auszugeben.

## Patentansprüche

1. Verfahren zum Betreiben eines von Abgas durchströmten, als Formkörper ausgebildeten Partikelfilters (1) einer Brennkraftmaschine, bei welchem beim Betrieb der Brennkraftmaschine eine Beladung des Partikelfilters (1) mit Ruß und/oder Asche erfolgt und von Zeit zu Zeit eine Regeneration des Partikelfilters (1) durch Abbrennen des auf dem Partikelfilter (1) angesammelten Rußes ausgelöst wird,
**dadurch gekennzeichnet, dass**
die Beladung (11) des Partikelfilters (1) in einem dreidimensionalen zusammenhängenden Volumenteilbereich des Partikelfilterkörpers sensorisch ermittelt wird und die Regeneration ausgelöst wird, wenn die Rußbeladung des Partikelfilters (11) in dem Volumenteilbereich einen vorgebbaren oberen Grenzwert überschritten hat.

2. Verfahren nach Anspruch 1,
**dadurch gekennzeichnet, dass**
die sensorische Ermittlung der Beladung des Partikelfilters (1) durch eine Messanordnung erfolgt, welche ein Elektrodenpaar mit einer ersten Elektrode (4) und einer beabstandet zur ersten Elektrode (4) angeordneten zweiten Elektrode (5) umfasst, wobei der Volumenteilbereich zwischen der ersten Elektrode (4) und der zweiten Elektrode (5) angeordnet ist und von der Messanordnung eine elektrische Größe erfasst wird, die mit der Dielektrizitätszahl der in dem Volumenteilbereich vorhandenen Materie korreliert.

3. Verfahren nach Anspruch 1 oder 2,
**dadurch gekennzeichnet, dass**
die Beladung (11) des Partikelfilters (1) in wenigstens zwei unterschiedlichen Volumenteilbereichen des Partikelfilters (1) ermittelt wird, und die Regeneration des Partikelfilters (1) ausgelöst wird, wenn die Rußbeladung in wenigstens einem der wenigstens zwei Volumenteilbereiche den vorgebbaren oberen Grenzwert überschritten hat.

4. Verfahren nach Anspruch 3,
**dadurch gekennzeichnet, dass**
die Beladung des Partikelfilters (1) in Volumenteilbereichen ermittelt wird, die in Richtung der Abgasströmung zueinander versetzt sind.

5. Verfahren nach einem der vorangehenden Ansprüche,
**dadurch gekennzeichnet, dass**
die Beladung des Partikelfilters (1) in einem Volumenteilbereich am ausströmseitigen Ende des Partikelfilters (1) ermittelt wird.

6. Verfahren nach einem der vorangehenden Ansprüche,
**dadurch gekennzeichnet, dass**
die Dauer der Regeneration an die Beladung des Partikelfilters (1) vor der Auslösung der Regeneration angepasst wird.

7. Verfahren nach einem der vorangehenden Ansprüche,
**dadurch gekennzeichnet, dass**
die Beladung des Partikelfilters (1) während der Regeneration des Partikelfilters (1) ermittelt wird und die Regeneration beendet wird, wenn die Beladung einen vorgebbaren unteren Grenzwert unterschreitet.

8. Verfahren nach einem der Ansprüche 1 bis 5,
**dadurch gekennzeichnet, dass**
die Rußbeladung des Partikelfilters (1) nach erfolgter Regeneration ermittelt und mit einem vorgebbaren Sollwert verglichen wird und die Dauer einer nachfolgenden Regeneration in Abhängigkeit vom Ergebnis des Vergleichs festgelegt wird.

9. Verfahren nach einem der vorangehenden Ansprüche,
**dadurch gekennzeichnet, dass**
bei der Ermittlung der Beladung des Partikelfilters (1) ein Rußbeladungsanteil und ein Aschebeladungsanteil ermittelt wird.

10. Verfahren nach einem der vorangehenden Ansprüche,
**dadurch gekennzeichnet, dass**
eine Auswertung der ermittelten Beladung des Partikelfilters (1) hinsichtlich einer Unbrauchbarkeit des Partikelfilters (1) erfolgt und bei einer festgestellten Unbrauchbarkeit eine darauf hinweisende Meldung ausgegeben wird.

11. Verfahren nach einem der Ansprüche 2 bis 10,
**dadurch gekennzeichnet, dass**
durch die Messanordnung die zwischen den Elektroden (4, 5) wirksame komplexe elektrische Impedanz oder die elektrische Kapazität erfasst wird.
